# EUROPEAN PATENT APPLICATION

(11) **EP 2 626 194 A1**
(43) Date of publication of application: **14.08.2013**
(21) Application number: 12154226.0
(22) Date of filing: 07.02.2012
(51) Int. Cl.: B29C 70/44, B29L 31/08

(54) **Method of manufacturing a turbine blade, system for manufacturing a turbine blade and intermediate member for manufacturing a turbine blade**

(71) Applicant: Siemens Aktiengesellschaft, 80333 München (DE)
(72) Inventor: Stiesdal, Henrik, 5000 Odense C (DK); Wolf, Erik, 91341 Röttenbach (DE)

(57) **Abstract**

There is described a method of manufacturing a turbine blade. The described method comprises (a) providing an elongate core (222, 322),(b) surrounding the elongate core (222, 322) with a textile structure (131, 231), (c) arranging the elongate core (222, 322) surrounded by the textile structure (131, 231) in a mold (300, 303, 313), (d) pressing at least a part of the textile structure (131, 231) against the mold (300, 303, 313), and (e) injecting a curing agent into the mold (300, 303, 313) to interact with the textile structure (131, 231), thereby forming the turbine blade (323). There is further described a system and an intermediate member for manufacturing a turbine blade by means of the described method.

## Description

### Field of invention

The present invention relates to the field of manufacturing turbine blades, more particularly to manufacturing blades for wind turbines and/or water turbines.

### Art Background

Turbine blades are typically produced by means of a casting process. Several suitable casting processes are known. For example, it is known to produce a blade for a wind turbine by separately molding two or more parts, such as an upper and a lower half, and then gluing the separately molded parts together to form the final blade. Further, as described e.g. in EP 1 310 351 A1, manufacturing methods have been developed which make it possible to produce a wind turbine blade as one single molded piece. The latter methods are also known as integral blade molding.

The abovementioned processes for manufacturing a turbine blade all include a cumbersome and labor intensive step of arranging the various laminate materials, such as dry glass fibers and/or pre-treated materials, in the mold prior to injection of a suitable liquid (e.g. epoxy) for curing. This step, which is commonly referred to as web packing, may e.g. include (a) placing mats or webs of glass fiber or carbon fiber in a lower mold-half to form an outer layer of fiber material, (b) providing core material, e.g. balsawood or PVC foam, on at least a part of the outer layer, and (c) covering the outer fiber layer and core material with an inner fiber layer of fiber mats or webs. After a arranging one or more molding core elements (which may be removed after the curing process), a second web packing step is performed by repeating the above steps (a) to (c) in reverse order to form the upper half of the structure. Finally, an upper mold-half is mounted on top of the structure and connected with the lower mold-half such that a closed mold is formed around the material layers and core elements. The blade is then cast by injecting epoxy resin into the mold. During the web packing steps of this process, great care has to be taken to arrange the various materials in the mold in such a way that undesired sheet overlaps, wrinkles etc., which may have a negative impact on the shape, stability, and overall quality of the final turbine blade, are avoided to the extent possible.

As can be seen, the web packing necessarily involves a significant amount of expensive and time consuming manual work in order to meet the required quality standard.

There may be a need for a simplified way of manufacturing a turbine blade.

### Summary of the Invention

This need may be met by the subject matter according to the independent claims. Advantageous embodiments of the present invention are set forth in the dependent claims.

According to a first aspect of the invention there is provided a method of manufacturing a turbine blade, such as a turbine blade for a wind turbine or a water turbine. The provided method comprises (a) providing an elongate core, (b) surrounding the elongate core with a textile structure, (c) arranging the elongate core surrounded by the textile structure in a mold, (d) pressing at least a part of the textile structure against the mold, and (e) injecting a curing agent into the mold to interact with the textile structure, thereby forming the turbine blade.

This aspect of the invention is based on the idea that by surrounding an elongate core with a textile structure and arranging this in a mold, the labor intensive and time consuming process of manually arranging a large number of individual layers or sheets of material in the mold can be omitted.

The described method allows for directly arranging the elongate core surrounded by the textile structure in the mold. Thereby, the labor, time and cost intensive step of web packing, which involves arranging and adjusting a large number of individual fiber mats or webs in the mold, can be replaced with the simple step of arranging a pre-fabricated unit or structure constituted by an elongate core surrounded by a textile structure in the mold.

It should be noted that the described method may also be used in combination with traditional web packing, in the sense that some further fiber material is manually arranged in the mold together with the elongate core surrounded by the textile structure. In this case, the web packing is not completely prevented, but the associated amount of manual work can nevertheless be significantly reduced in comparison to pure web packing.

The elongate core is preferably made from a flexible material. Thereby, if a vacuum is produced within the mold after the elongate core surrounded by the textile structure has been placed therein, the flexible core may expand and thereby press the textile structure against the mold such that a close fit can be obtained. This effect can also be achieved or further enhanced by inflating the elongate core with a suitable fluid, such as a gas, or by inserting a relatively hard mold core body into the elongate core.

The textile structure is preferably a complex structure consisting of several different fiber materials, such as glass fibers, carbon fibers, natural fibers, and spacer or core materials, such as balsa wood or PVC foam. The textile structure may appear as forming a fluffy tubular or sock-like structure embedding the various aforementioned materials around the elongate core. The pre-manufactured textile structure preferably represents at least a part of the load carrying element of the turbine blade. The textile structure may be pre-hardened such that it is easier to handle, e.g. during arrangement of the textile structure within the mold.

The mold is preferably constituted by two halves, e.g. an upper and a lower half. The elongate core surrounded by the textile structure may be arranged in the lower half of the mold, whereupon the upper half of the mold is connected with the lower half in order to form the final (closed) mold.

The curing agent is preferably a suitable epoxy resin or liquid selected in consideration of the particular fiber material or materials contained in the textile structure.

According to an embodiment of the invention, the textile structure is woven around the elongate core by means of a 3D weaving process. By utilizing a 3D weaving process, a plurality of fibers and threads can be combined into a complex structure which is circumferentially closed around, i.e. surrounding, the elongate core. Some or all of the fibers and/or threads used in the 3D weaving process may preferably be formed by pre-woven textile-like strings in order to increase the speed of the 3D weaving process. Furthermore, the fibers, threads and/or pre-woven strings may consist of raw material and/or of pre-impregnated material, so called pre-pregs. The pre-impregnated material may be pre-impregnated with resin or other additives in order to e.g. increase the rigidity of the material such that the material can better maintain its intended position within the woven structure. Thereby, the stability of the woven structure can be improved such that the woven structure will maintain its shape and be easy to handle. However, the pre-impregnation may also assist the final curing process of the structure.

In the present context, the notion of 3D weaving process is intended to denote a process of manufacturing a textile structure exhibiting a substantial third dimension as opposed to classical woven structures which are substantially planar, i.e. two-dimensional.

During the 3D weaving process, the elongate core is preferably held in and/or by the 3D weaving machinery such that the textile structure can be woven as a closed tubular, i.e. sock-like, structure directly around the elongate core by e.g. moving at least a part of the weaving machinery along the longitudinal axis of the elongate core. The closed 3D structure extends around the complete circumference of the elongate core, i.e. 360°.

The resulting woven structure is preferably a non-homogenous structure. The fibers and threads of the textile structure may extend in varying and individual directions relative to the elongate core. That is, a particular thread or fiber may extend mainly in the longitudinal direction of the elongate core, mainly in a circumferential direction around the elongate core, or in a combination of said directions. In the latter case, the fiber or thread may e.g. form a helix-like shape around the elongate core. Furthermore, each thread or fiber may extend at varying positions in the radial direction of the elongate core in the sense that the distance to the longitudinal axis of the elongate core varies along the path of the thread or fiber. The pattern of fibers and threads may be irregular, i.e. the pattern structure may vary in the longitudinal, radial and/or circumferential direction of the elongate core. Thereby, it is possible to form a textile structure around the elongate core which exhibits varying functional and physical characteristics, such as thickness, stiffness, reinforcement, density and electrical conductivity etc., at different positions along and around the elongate core.

According to a further embodiment of the invention, the textile structure is formed by wrapping a textile sheet around the elongate core. Like the aforementioned woven structure, the textile sheet preferably consists of a variety of fibers and threads extending in various directions relative to each other. By wrapping the textile sheet around the elongate core and closing it to form a circumferentially closed structure, a tubular or sock-like structure surrounding the elongate core similar to the abovementioned woven textile structure can be obtained. The wrapping and/or closing of the textile sheet may be made manually and/or automatically, e.g. by means of a suitable robot. The textile sheet may be obtained by cutting a closed 3D textile structure as described above along the longitudinal axis of such tubular structure.

According to a further embodiment of the invention, the textile structure is substantially cylindrical. It should be noted, however, that the cross-section and/or the thickness of the textile structure may vary along the longitudinal direction of the elongate core in accordance with any desired variation in the cross-section and/or the thickness of the turbine blade.

According to a further embodiment of the invention, the textile structure comprises a plurality of layers, said plurality of layers comprising at least one inner layer and at least one outer layer which surrounds the inner layer. Each of the inner layer and the outer layer may be obtained by a 3D weaving process or by a wrapping process as described above. Thereby, the complexity of the process of surrounding the elongate core with a textile structure may be reduced by splitting it into two or more steps.

According to a further embodiment of the invention, each of the plurality of layers comprises a specific textile material or a spacer material. The specific textile material may comprise one or more fiber materials. Thereby, specific functions and physical characteristics, e.g. thickness, stiffness, reinforcement, density and electrical conductivity etc., can be provided by individual pre-fabricated sheets.

According to a further embodiment of the invention, the composition of material for at least one of the plurality of layers is varied along the longitudinal axis and/or the circumference of the substantially cylindrical structure. Thereby, the above-mentioned functions and physical characteristics, e.g. thickness, stiffness, reinforcement, density and electrical conductivity etc., can be distributed along and around the elongate core as required, e.g. by given design specifications of the turbine blade which is to be manufactured.

According to a further embodiment of the invention, the textile structure is integrally formed. That is, the layers constituting the textile structure are formed as a one-piece composite structure or contiguous composite structure by means of a 3D weaving process or a wrapping process as described above.

According to a further embodiment of the invention, the at least one outer layer is slipped around the inner layer. In this case, the outer layer is drawn over the inner layer as one sock over another sock.

According to a further embodiment of the invention, the inner layer is surrounded by an intermediate layer which eases slipping the outer layer around the inner layer. The intermediate layer may preferably be made from plastic or a similar smooth material.

According to a further embodiment of the invention, the method further comprises (a) providing a further elongate core, (b) surrounding the further elongate core with a further textile structure, (c) arranging the further elongate core surrounded by the further textile structure next to the elongate core surrounded by the textile structure in the mold, and (d) pressing at least a part of the further textile structure against the mold.

The details regarding the elongate core, the textile structure, and the process of surrounding the elongate core with the textile structure of the various embodiments described above apply equally to the further elongate core, the further textile structure, and the process of surrounding the further elongate core with the further textile structure. It is noted, however, that the further elongate core and further textile structure may, in terms of size, structure, shape, composition of material, and production method, be different from the elongate core and textile structure next to which it is arranged.

The further elongate core surrounded by the further textile structure is preferably arranged in the mold in such a way that the longitudinal axis of the further elongate core is substantially parallel with the longitudinal axis of the elongate core. The two parallel structures are preferably arranged respectively at a leading edge side and a trailing edge side of the mold. Here, the terms "leading edge" and "trailing edge" refer, as is customary practice in the field of turbine blades, to the rotational direction of the turbine blade as mounted on a turbine rotor.

When pressing at least a part of the textile structure and at least a part of the further textile structure against the mold, other parts of said textile structures may be pressed against each other and thereby form a beam-like structure, such as an I-beam structure, extending in parallel with the longitudinal axes of the elongate cores within the mold. This beam-like structure may preferably also interact with the injected curing agent and thereby improve the stability and stiffness of the resulting turbine blade.

According to a second aspect of the invention, there is provided a system for manufacturing a turbine blade. The provided system comprises (a) a device for providing an elongate core, (b) a device for surrounding the elongate core with a textile structure, (c) a mold adapted for receiving the elongate core surrounded by the textile structure, (d) a device for pressing the textile structure against the mold, and (e) a device for injecting a curing agent into the mold to interact with the textile structure, thereby forming the turbine blade.

The described system is based on the idea that by surrounding an elongate core with a textile structure and arranging this in a mold, the labor intensive and time consuming process of manually arranging a large number of individual layers or sheets of material in the mold can be omitted.

The described system allows for directly arranging the elongate core surrounded by the textile structure in the mold. Thereby, the labor, time and cost intensive step of web packing, which involves arranging and adjusting a large number of individual fiber mats or webs in the mold, can be replaced with the simple step of arranging a pre-fabricated unit or structure constituted by an elongate core surrounded by a textile structure in the mold.

The elongate core is preferably made from a flexible material. Thereby, if a vacuum is produced within the mold after the elongate core surrounded by the textile structure has been placed therein, the flexible core may expand and thereby press the textile structure against the mold such that a close fit can be obtained. Such vacuum may, e.g., be provided by means of a suitable suction unit connected to the mold The pressing can also be achieved or further enhanced by inflating the elongate core with a suitable fluid, such as a gas. The inflation is preferably achieved by means of a pump.

The mold is preferably constituted by two halves, e.g. an upper and a lower half. The elongate core surrounded by the textile structure may be arranged in the lower half of the mold, e.g. by means of a robot or a crane, whereupon the upper half of the mold is connected with the lower half in order to form the final (closed) mold.

The curing agent, which is preferably a suitable epoxy casting resin or liquid selected in consideration of the particular fiber material or materials contained in the textile structure, is injected into the mold by means of a suitable injecting device.

According to an embodiment of the invention, the system further comprises a 3D weaving apparatus for weaving the textile structure around the elongate core in a 3D weaving process. By means of the 3D weaving apparatus, a plurality of fibers and threads can be combined into a complex structure which is circumferentially closed around, i.e. surrounding, the elongate core. The fibers and/or threads used in the 3D weaving process may preferably be formed by pre-woven textile-like strings in order to increase the speed of the 3D weaving process.

The elongate core is preferably fed in its longitudinal direction through the 3D weaving apparatus such that the textile structure is woven as a tubular sock-like structure directly around the elongate core.

The resulting woven structure is preferably a non-homogenous structure as described in detail above.

According to a third aspect of the invention, there is provided an intermediate member for manufacturing a turbine blade. The provided intermediate member comprises (a) an elongate core, and (b) a textile structure surrounding the elongate core. The intermediate member is adapted to be arranged in a mold such that a turbine blade can be formed by pressing the textile structure against the mold, and injecting a curing agent into the mold to interact with the textile structure.

This aspect of the invention is based on the idea that by providing an intermediate product which is formed by surrounding an elongate core with a textile structure and adapted to be directly arranged in a mold, the labor intensive and time consuming process of manually arranging a large number of individual layers or sheets of material in the mold can be omitted. Thereby, a simplified and cheaper production of the turbine blades, such as rotor blades for a wind turbine, can be obtained.

According to a fourth aspect of the invention, there is provided a turbine blade, in particular for a wind turbine. The provided turbine blade has been manufactured by means of a method according to the first aspect of the invention as described above.

Also this aspect of the invention is based on the idea that by surrounding an elongate core with a textile structure and arranging this intermediate product in a mold, the labor intensive and time consuming process of manually arranging a large number of individual layers or sheets of material in the mold can be omitted.

It should be noted that any description of embodiments or examples which refers specifically to blades for wind turbines or to production of blades for wind turbines may be equally utilized in connection with blades for water turbines and production of blades for water turbines, and vice versa.

Further, it has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise notified, in addition to any combination of features belonging to one type of subject matter also any combination between features relating to different subject matters, in particular between features of the method type claims and features of the apparatus type claims, is considered as being disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows an illustrative view of a textile structure during production in accordance with an embodiment of the present invention.
Figure 2 shows a part of a system for manufacturing a turbine blade in accordance with an embodiment of the present invention.
Figure 3 shows a cross-sectional view of a mold for casting a turbine blade in accordance with an embodiment of the present invention.

### Detailed Description

The illustration in the drawing is schematically. It is noted that in different figures, similar or identical elements are provided with the same reference signs or with reference signs, which are different from the corresponding reference signs only within the first digit.

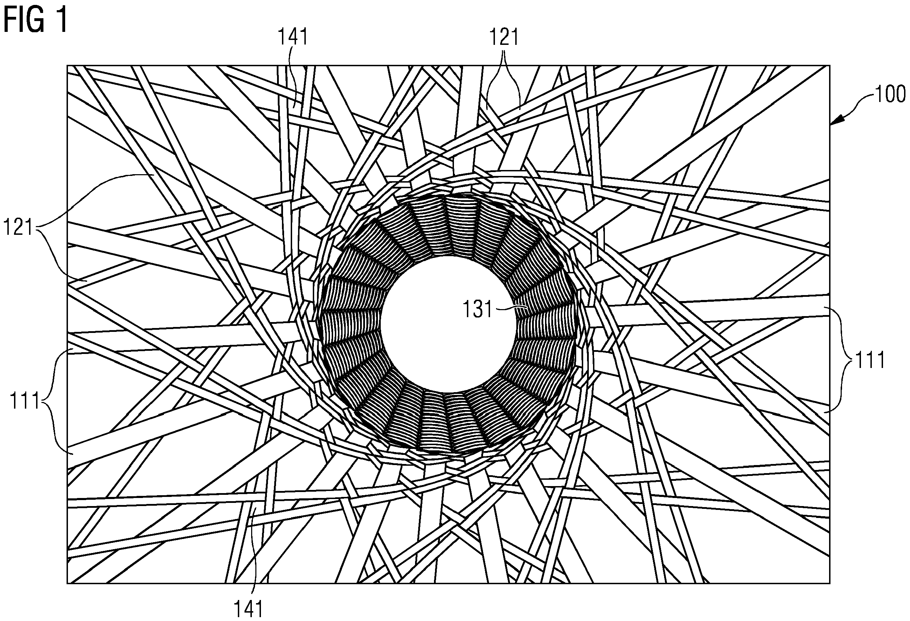

Figure 1 shows a temporary state of a textile structure 100 during production in accordance with an embodiment of the present invention. The central part of Figure 1 shows a finished woven tubular textile matrix structure 131 having a substantially circular cross-section. The textile structure may be formed around a core, such as an elongate core (not shown ) .

In the outer parts of Figure 1, the various fibers or threads 111 and 121 which are woven into the finished textile matrix structure 131 can be seen. In particular, Figure 1 shows a first kind of fibers 111 (first fibers 111) and a second kind of fibers 121 (second fibers 121). In the present embodiment, the first fibers 111 are functional fibers or threads, which are chosen to provide a particular function during curing or in the final turbine blade (after curing). More specifically, the first fibers 111 are fibers intended to provide functions like, e.g., stiffness, reinforcement, flexibility, electrical conductivity, protection against UV radiation etc. In the final textile structure 131, the first fibers 111 extend in the longitudinal direction of the tubular structure, i.e. in the direction normal to the plane of the drawing. On the other hand, the second fibers or threads 121 extend mainly in the circumferential direction of the final tubular textile structure 131. By crossing neighboring first fibers 111 on opposite sides of the first fibers 111, i.e. respectively on the inner and outer side of the first fibers 111 or vice versa, the second fibers 121 serve to fixate or hold the first fibers 111 in position. Furthermore, the second fibers 121 cross each other at overlapping sections 141, thereby providing further stability to the textile structure 131.

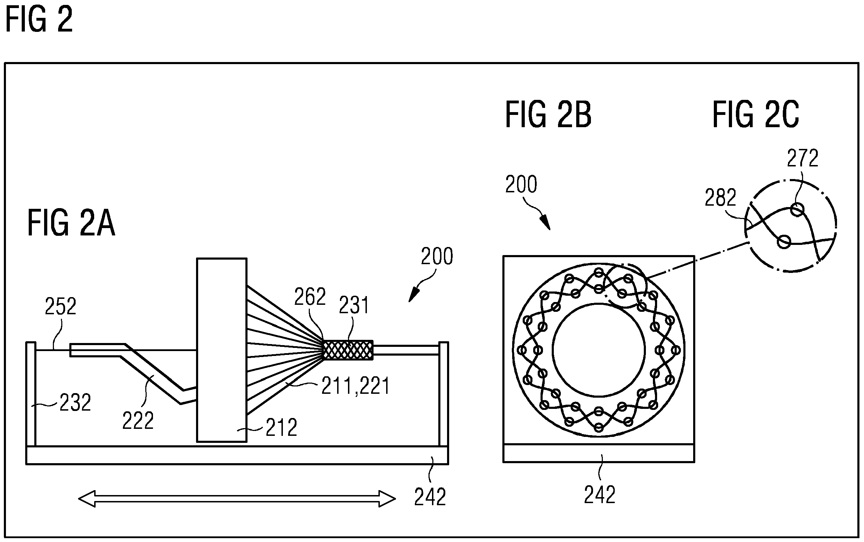

Figure 2 shows a part of a system for manufacturing a turbine blade in accordance with an embodiment of the present invention. More particularly, Figure 2A is a side view of a 3D weaving or braiding system 200 which forms part of an embodiment of the present invention, Figure 2B is a front view of the 3D weaving or braiding system 200, and Figure 2C shows a detailed view of a part of the 3D braiding system 200.

The 3D weaving system 200 illustrated in Figure 2 comprises a braiding device 212, a core material support 232, and a linear guiding system 242. As shown in Figures 2B and 2C, the braiding device 212 comprises a plurality of bobbin laces 272 which are substantially circularly arranged around the braiding axis 252. The bobbin laces 272 are individually loaded with the various threads and fibers 211, 221 which are to be woven into the finished 3D textile structure 231. The core material support 232 holds an elongate core 222. The linear guiding system 242 is capable of moving the braiding device 212 along the braiding axis 252 as indicated by the horizontal arrow below the linear guide system 242. The bobbin laces 272 are movable in a circumferential direction around the braiding axis 252. Further, the bobbin laces 272 are movable in the radial direction, i.e. back and forth along lines extending through the braiding axis 252 in the plane of Figure 2B. By simultaneously moving the bobbin laces 272 in the circumferential and radial directions, the bobbin laces 272 move along traces 282 as shown in Figures 2B and 2C. Thereby, the fibers 211, 221 are moved relative to each other and braided at the braiding point 262 and a closed 3D tubular textile structure is produced. The movement of the bobbin laces 272 and/or the movement of the braiding device 212 is preferably controlled by a computer system (not shown).It should be noted that the lace bobbins 272 may be arranged in groups which are distributed along the braiding axis 252. For example, the inner circular group of lace bobbins 272 shown in Figure 2B may be separated from the outer circular group of bobbin laces 272 by a fixed or variable distance along the braiding axis 252.

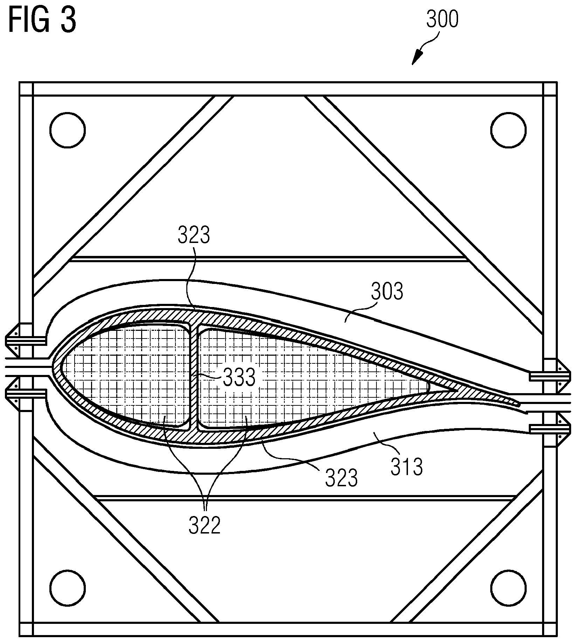

Figure 3 shows a cross-sectional view of a mold 300 for casting a turbine blade in accordance with an embodiment of the present invention. The mold 300 shown in Figure 3 comprises an upper half 303 and a lower half 313 which are connected to form the complete mold 300. The inner surface of the mold 300 shown in Figure 3 is designed for molding the outer aerodynamic shape of a turbine blade for a wind turbine. More particularly, as shown in Figure 3, the mold 300 contains the cured turbine blade 323. The turbine blade 323 is hollow and contains two elongate core elements 322. The two core elements 322 extend in parallel (in the direction normal to the plane of the drawing). One of the core elements 322 is arranged at a trailing-edge side of the blade 323, i.e. to the left in Figure 3, and the other one of the core elements 322 is arranged at a leading-edge side of the blade 323, i.e. to the right in Figure 3. The core elements 322 are made from a flexible material which has furthermore been inflated by injection of a suitable fluid, such as air or oil, prior to curing the blade. The blade 323 originally, i.e. prior to being cured, consisted of two 3D textile structures formed around the parallel flexible core elements 322. By inflating the elongate core elements 322 with e.g. nitrogen or ambient air and/or by producing a vacuum within the mold 300, the textile structures were pressed against the inner surface of the mold 300. At the same time, the adjacent parts of the textile structures were furthermore pressed against each other and in the end, i.e. after curing, resulted in the I-beam 333 extending longitudinally between the upper and lower halves of turbine blade 323. By releasing the fluid from the mold 300, the cores 322 can be released through the end of the blade which is designed to be mounted on the rotor of a wind turbine or a water turbine.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A method of manufacturing a turbine blade, the method comprising
providing an elongate core (222, 322),
surrounding the elongate core (222, 322) with a textile structure (131, 231),
arranging the elongate core (222, 322) surrounded by the textile structure (131, 231) in a mold (300, 303, 313),
pressing at least a part of the textile structure (131, 231) against the mold (300, 303, 313), and
injecting a curing agent into the mold (300, 303, 313) to interact with the textile structure (131, 231), thereby forming the turbine blade (323).

2. The method as set forth in claim 1, wherein the textile structure (131, 231) is woven around the elongate core (222, 322) by means of a 3D weaving process.

3. The method as set forth in claim 1, wherein the textile structure (131, 231) is formed by wrapping a textile sheet around the elongate core (222, 322).

4. The method as set forth in any one of the preceding claims, wherein the textile structure (131, 231) is cylindrical.

5. The method as set forth in the preceding claim, wherein the textile structure (131, 231) comprises a plurality of layers, said plurality of layers comprising at least one inner layer and at least one outer layer which surrounds the inner layer.

6. The method as set forth in the preceding claim, wherein each of the plurality of layers comprises a specific textile material or a spacer material.

7. The method as set forth in claim 5 or 6, wherein the composition of material for at least one of the plurality of layers is varied along the longitudinal axis and/or the circumference of the substantially cylindrical structure.

8. The method as set forth in any one of claims 5 to 7, wherein the textile structure (131, 231) is integrally formed.

9. The method as set forth in any one of claims 5 to 7, wherein the at least one outer layer is slipped around the inner layer.

10. The method as set forth in the preceding claim, wherein the inner layer is surrounded by an intermediate layer which eases slipping the outer layer around the inner layer.

11. The method as set forth in any one of the preceding claims, further comprising
providing a further elongate core (222, 322), surrounding the further elongate (222, 322) core with a further textile structure (131, 231),
arranging the further elongate (222, 322) core surrounded by the further textile structure (131, 231) next to the elongate core (222, 322) surrounded by the textile structure (131, 231) in the mold (300, 303, 313), and
pressing at least a part of the further textile structure (131, 231) against the mold (300, 303, 313).

12. A system for manufacturing a turbine blade, the system comprising
a device (232) for providing an elongate core (222, 322),
a device (212) for surrounding the elongate core (222, 322) with a textile structure (131, 231),
a mold (300, 303, 313) adapted for receiving the elongate core (222, 322) surrounded by the textile structure (131, 231),
a device for pressing the textile structure against the mold (300, 303, 313), and
a device for injecting a curing agent into the mold (300, 303, 313) to interact with the textile structure (131, 231), thereby forming the turbine blade (323).

13. The system as set forth in the preceding claim, further comprising a 3D weaving apparatus (200) for weaving the textile structure (131, 231) around the elongate core (222, 322) in a 3D weaving process.

14. An intermediate member for manufacturing a turbine blade, the intermediate member comprising
an elongate core (222, 322), and
a textile structure (131, 231) surrounding the elongate core (222, 322),
wherein the intermediate member is adapted to be arranged in a mold (300, 303, 313) such that a turbine blade can be formed by
pressing the textile structure (131, 231) against the mold (300, 303, 313), and
injecting a curing agent into the mold (300, 303, 313) to interact with the textile structure.

15. A turbine blade, in particular for a wind turbine, wherein the turbine blade (323) has been manufactured by means of a method as set forth in any one of claims 1 to 11.
